# EUROPEAN PATENT SPECIFICATION

(11) **EP 1 402 695 B1**
(45) Date of publication and mention of the grant of the patent: **07.03.2007**
(21) Application number: 02751033.8
(22) Date of filing: 17.06.2002
(51) Int. Cl.: H04L 27/00

(54) **COMPENSATION OF MISMATCH BETWEEN QUADRATURE PATHS**
AUSGLEICH VON FEHLANPASSUNGEN ZWISCHEN QUADRATURPFADEN
COMPENSATION DE DESADAPTATION ENTRE DES CHEMINS EN QUADRATURE

(30) Priority: 20.06.2001 EP 01401631
(43) Date of publication of application: 31.03.2004
(60) Divisional application: 04105374.5
(73) Proprietor: Freescale Semiconductor, Inc., Austin, Texas 78735 (US)
(72) Inventor: LEHNING, Heinz, CH-1295 Tannay (CH); GERCEKCI, Anil, CH-1293 Bellevue (CH); SIMOENS, Sebastien, F-92330 Sceaux (FR)
(74) Representative: Wharmby, Martin Angus
(86) International application number: PCT/EP2002/006671
(87) International publication number: WO 2003/001758

(56) References cited:
- EP-A- 1 130 866
- WO-A-01/69876
- WO-A-01/80471
- GB-A- 2 272 589
- US-A- 5 410 605
- US-A- 5 978 823
- US-A- 6 157 235
- BREEMS ET AL.: "A 1.8mW CMOS sigma-delta modulator with integrated mixer for A/D conversion of IF signals" IEEE SOLID-STATE CIRCUITS CONFERENCE, 15 - 17 February 1999, pages 52-53, XP010329796 Piscatway, US ISBN: 0-7803-5126-6
- TOMOHIDE MIYAGI, HIROSHI OCHI: "An alias-free subband adaptive equalizer for OFDM system" IEEE INTERNATIONAL CONFERENCE ON ACOUSTICS, SPEECH, AND SIGNAL PROCESSING, 7 - 11 May 2001, pages 2413-2416 vol.4, XP002201514 Piscataway, US
- COLINA-MORLESQ: "On-line neural network control applications" IEEE WORLD CONGRESS ON COMPUTATIONAL INTELLIGENCE, 27 June 1994 (1994-06-27), pages 2494-2499, XP010127589 New York, US
- BENEDETTO, MANDARINI: "Analysis of the effect of the I/Q base-band filter mismatch in an OFDM modem" WIRELESS PERSONAL COMMUNICATIONS, vol. 12, no. 2, February 2000 (2000-02), pages 175-186, XP000890750 NL

## Description

### Field of the Invention

The present invention relates to an apparatus for improving signal mismatch compensation and a related method. The apparatus and related method are particularly, but not exclusively, suitable for use with Radio Frequency (RF) Wireless Local Area Networks (WLAN's).

### Background of the Invention

As greater demands are placed on RF systems, for example in WLAN's, in order to increase channel capacity by utilizing available bandwidth, corresponding demands are placed upon performance and tolerance of components used in their RF circuits.

Various standards have been developed in order to increase channel capacity. HIPERLAN 2 is a Wireless Local Area Network (WLAN) protocol, based on, and incorporating, an Orthogonal Frequency Division Multiplexing (OFDM) scheme.

An advantage of using an OFDM scheme for transmitting RF signals is that it is possible to transmit more data for a given channel bandwidth than was previously possible. OFDM transceivers are used in Digital Audio Broadcast (DAB); Digital Video Broadcast (DVB); Asymmetric Digital Subscriber Loop (ADSL) transmission techniques, as well as wireless broadband transmission techniques such as IEEE 802.11A; and the Japanese MMAC standard. Most systems require transmit and receive sections for bi-directional communication. DVB is an exception due to its one way communication nature.

The following modulation formats may be incorporated in the HIPERLAN 2 scheme: Binary Phase Shift Keying (BPSK); Quadrature Phase Shift Keying (QPSK); and Quadrature Amplitude Modulation (16 QAM) or 64 QAM. The flexibility of use of the aforementioned modulation techniques means that data rates of between 6 and 54 Mbit/s can be transmitted.

A particular advantage of the HIPERLAN 2 scheme is that systems incorporating it may be used in offices, shops, airports or in similar environments, which were previously prone to multipath dispersion. This is because RF transmissions which use HIPERLAN 2 are reflection resistant.

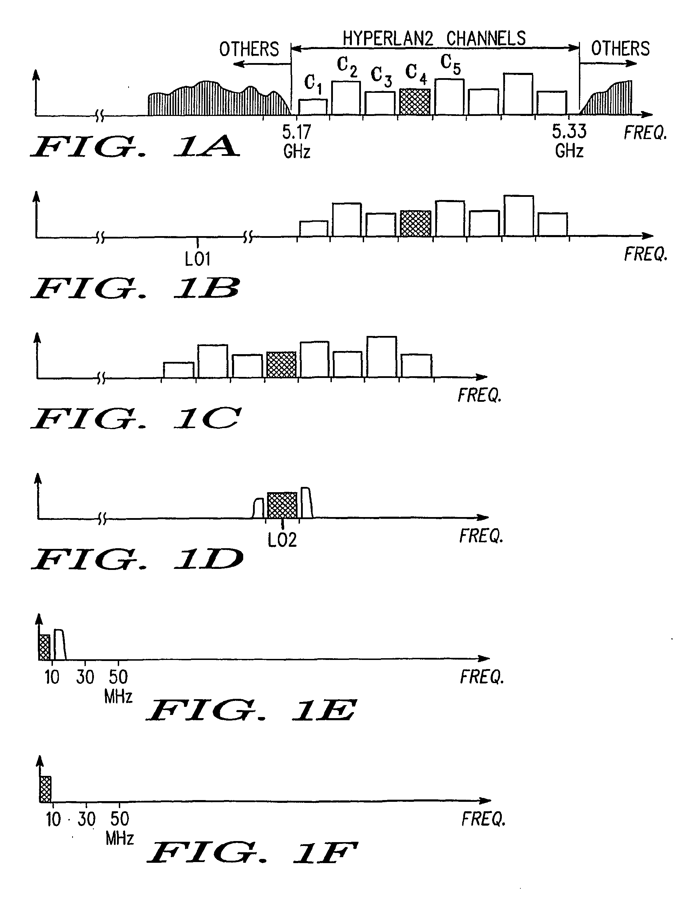

Typically HIPERLAN 2 operates at 5.5 GHz with multiple channels; each channel has 52 active sub-carriers within a 20 MHz bandwidth. OFDM modulation schemes require two component signals to be in phase quadrature. The two component signals are referred to as the I and Q signals. During operation, and following down conversion to a base-band signal, the base-band signal of interest has two 10 MHz side band signals, at which sub-carrier frequencies, the I and Q component signals lie. Figures 1a and 1b illustrate diagrammatically how close together the sub-carrier channels are one from another.

However, because only a relatively small frequency band separates adjacent sub-carrier channels, even small changes in component characteristics can cause variations in the overall behaviour of a device to signals. These changes, which may arise as a result of thermal drift, can give rise to, for example, variations in device characteristics. This in turn can cause cross-talk interference between adjacent sub-carriers. Typically a change in overall absolute tolerance of ±16% of passive components' value, prevents a filter from achieving the required -27dB stop band performance needed in HIPERLAN 2.

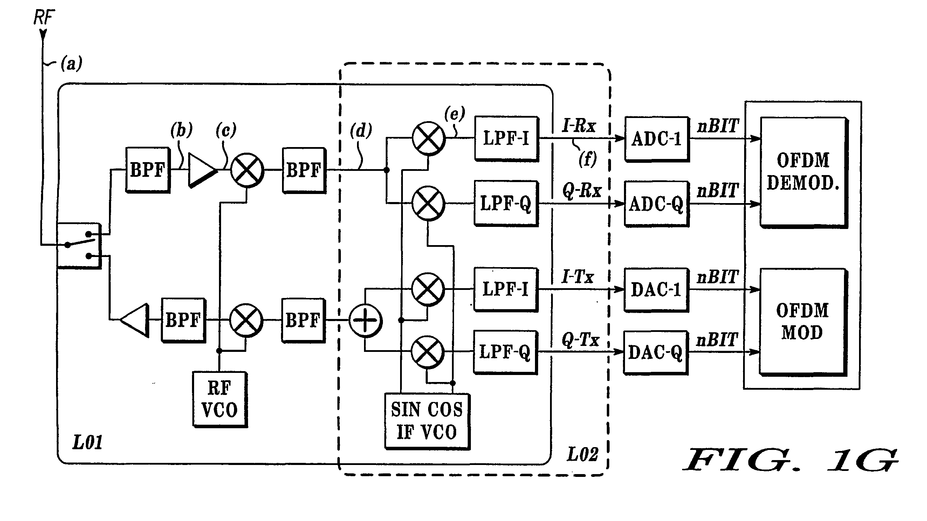

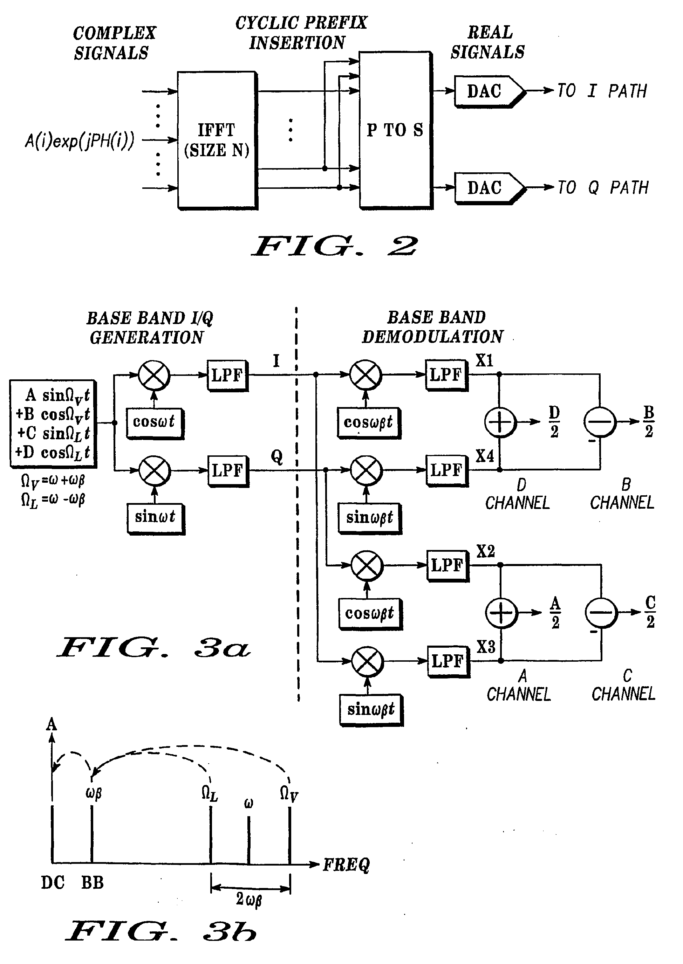

So as to assist in the understanding of the invention a basic description of Orthogonal Frequency Division Multiplexing (OFDM) is provided with reference to Figures 1 to 4. The time domain signal transmitted to an OFDM transceiver 10 consists of a sum of (K) sinusoidal waveforms of different amplitudes A(i) and phases φ(i). At transmission of the RF signal, digital information is mapped onto the (K) sub-carrier signals or sub-carriers. These signals are then transformed into time domain signals using Inverse Fast Fourier transform (IFFT). Denoting the sampling period T, the duration of the IFFT output block is Tᵤ = NT (where N>K). A cyclic extension of length Tₑ can be added before the block, forming a symbol of duration denoted as Tₚ = Tᵤ + Tₑ. The sample block is serialized and converted to an analog signal.

The sub-carrier spacing is 1/Tᵤ. The sub-carriers are of overlapping frequencies. However, the IFFT guarantees that data mapped on each frequency can be recovered independently from data carried on the (K-1) other sub-carriers by means of a Fast Fourier Transform (FFT) and that this has no influence on data content of other sub-carriers. This is a result of processing theory. Orthogonal Frequency Division Multiplexing exploits this principle.

Hence OFDM ensures very efficient use of available bandwidth for a given data transmission speed.
A time domain signal (consisting of successive symbols) is converted from digital to analog and up-converted to an RF centre frequency (f_{c}) using appropriate frequency shifts by way of frequency mixers (not shown). The RF signal is then transmitted through an appropriate medium. Thus, the OFDM signal contains (K) sub-carriers at frequencies f_{c} + i/Tᵤ. A received RF signal (R_{fc}) is translated to a base band signal; converted from analog to a digital signal; and then transformed to the frequency domain using Fast Fourier Transforms after having removed its cyclic extension.
Information is recovered in the form A(i) and φ(i). This information is then demapped into its basic elements in order to recover a transmitted digital bit stream.

The so-called front end 40 of a receiver down-converts a received signal (in the 5.15-5.725 GHz band) and provides base band information to the digital signal processor device. Conversion can be done in two steps, for example as in a standard heterodyne receiver which uses an appropriate intermediate frequency (IF). After the IF frequency there are two possibilities to convert the analog signal for transportation to analog-to-digital converters (ADC's) 57 and 58. These are: analog I-Q generation (base band); and down conversion to a second, low intermediate frequency (IF) .

Analog I-Q generation requires mixing the IF signal using two mixers: one multiplies the signal with a sine function, thereby generating the I signal; and the other multiplies with a signal (of the same frequency) but phase shifted by 90 degrees, such as cosine function, in order to generate the Q signal. All analog treatment during and after this multiplication: such as base-band low pass filtering used for channel selectivity; mixing; amplification and analog to digital conversion; are thereafter subject to mismatch. Base-band low pass filtering is required to eliminate adjacent channels from interfering with the selected signal channel during analog-to-digital conversion.

These mismatches are due to slight differences in the values and behaviour of active and passive elements found in I and the Q signal paths, even though great care is taken in the design and layout of these elements in a symmetrical way during the design of the system and/or circuit. Mismatches are even more pronounced when the aforementioned effects of thermal drift are taken into account.

One way of envisaging down conversion of the RF signal to base-band (I and Q signals) in the receiver, is to imagine that the original RF channel is 'folded in half' around the centre frequency, such that the (I and Q) base-band signals have effectively half the bandwidth compared with the corresponding RF channel. In base band the original RF centre frequency occurs at DC and sub-carriers that were symmetrically located to the left and right of the centre frequency (in RF), following down conversion, the subcarriers effectively become superimposed onto each other, so that they occur in pairs on half the number (K/2) of sub-carrier frequencies in base-band. Only precisely matched I and Q signal generation and signal treatment throughout the processing chain, allows correct demodulation of the information to be performed by exact superimposition of sub-carriers. Any mismatch between I and Q signal paths, however small, results in cross-talk between the superimposed sub-carriers. Given the tolerances imposed, such cross-talk reduces the available bandwidth for data transmission and/or introduces unacceptable errors.

It will be appreciated that the same criteria apply for transmitter signal processing, however in reverse order.

The outcome of this mismatch is that the representation of A(i) and φ(i), of the various sub-carriers may not be correct and can cause decoding errors of the base-band signal.

### Prior Art

Many I/Q compensation techniques only deal with a mismatch which remains constant over the whole frequency band of the signal. For instance, in a system disclosed in US Patent US-A-5 263 196 (Motorola) the frequency-independent part of the mismatch is estimated and compensated in the time-domain. This method applies well to narrow band signals.

US Patents US-A-4 003 054 (Raytheon) and US-A-5 872 538 (Lockheed Martin) deal with frequency-domain processing of a training signal to estimate frequency-dependent I/Q mismatch. Both differ from the present invention in several respects. Firstly they operate in receive mode only as they are adapted for radar-processing; and secondly, neither makes reference to an estimation of the transmit I/Q mismatch, nor to any pre-compensation. Additionally the systems described send several training chirp signals, prior to input of signals to down conversion mixers.

Another difference is that compensation is applied to a narrow band signal which is transmitted on an unknown frequency, whereas in the present invention, the signal extends over a large set of known frequencies. In particular the arrangement described in US-A-4 003 054 requires generation of several training pulses or chirps used for calibration. The chirps are used to modulate a carrier signal, which in turn is then phase shifted in order to simulate a Doppler shifted signal. The simulated Doppler shifted signal is then applied to the quadrature detector which is being calibrated. Further processing of a plurality of signals is then required in order to derive a frequency spectrum of the simulated Doppler shift. Again substantial processing needs to be performed on the data in order to derive correction signals for each of the imbalances in the quadrature demodulated frequency components of the signals to be corrected. Therefore the amount of signal processing, as well as the processing capability required, is substantial.

US-A-5,978,823 (Koslov et al.) discloses a mechanism of frequency conversion, mixing, filtering, digital swap-circuits and invertors in the digital domain. However, the aforementioned problem of mismatch between two signal paths does not exist in a digital form. Hence, the Koslov patent application does not mention, and thus not address the aforementioned mismatch problems.

An object of the present invention is to eliminate errors arising from mismatch characteristics of active and passive devices, by improving signal mismatch compensation, particularly in OFDM devices and associated systems.

### Summary of the Invention

According to the present invention there is provided an apparatus for improving mismatch compensation, the mismatch occuring between first and second RF signal paths as defined in claim 1. The first and second signals may be orthogonal one to another and may be encoded quadrature components of an OFDM signal.

Frequency mixing is advantageously performed at a baseband frequency, typically around 20 MHz, because lower sampling rates are required for processing and processors and samplers which operate around this frequency band, tend to be relatively cheap. Down conversion from an intermediate to a base-band (prior to mixing preserves the digital data) is preferably achieved by multiplication with a scale factor.

Preferably two switches are provided, each for the respective first and second channels. Switching may be controlled by way of a micro-processor and is advantageously achieved using a device which includes at least one flip-flop associated with each channel which receives either of said first or second RF signals.

A signal mismatch compensator may be incorporated in an adaptive Radio Frequency (RF) filter for filtering first and second RF signals from an OFDM encoded carrier signal. An example of such an adaptive RF filter is described and claimed in the current Assignee's Patent Application, of even filing date, entitled: An Adaptive Filter.

In OFDM transceivers, basically two types of analog signal transfer, can be undertaken between the analog transceiver section and the digital transceiver section. In a first method, an analog signal is transported on a low intermediate frequency (IF), for example 20 MHz. In this case each of the OFDM sub-carriers is assigned its own specific frequency. The procedure is also called Intermediate Frequency (IF) sampling. Between analog and digital transceiver sections, the procedure requires one signal path for reception (one ADC) and one signal path for transmission (one DAC).

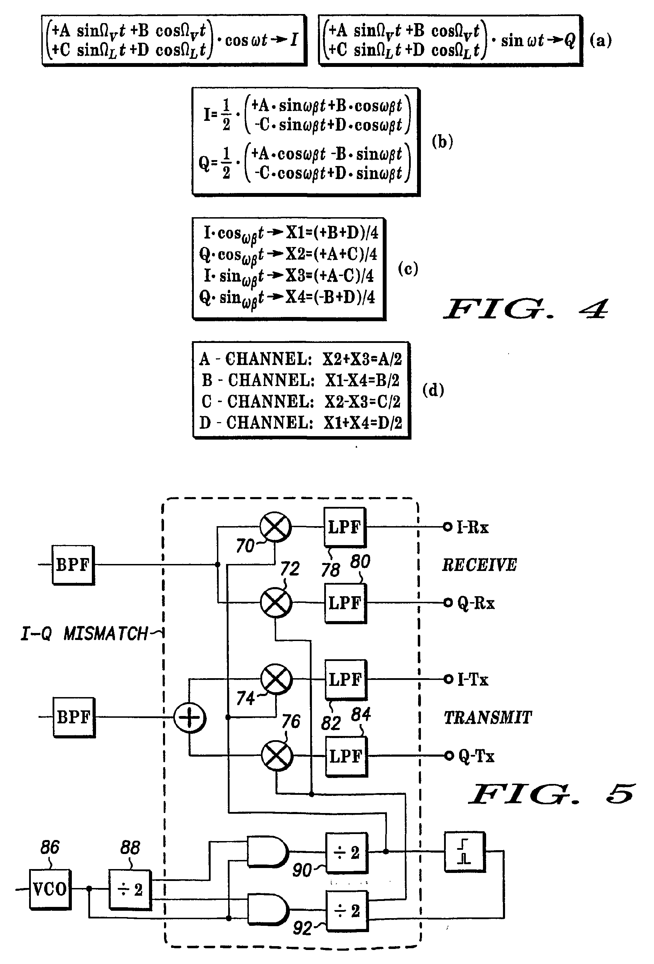

The second of these is illustrated for purposes of assisting better understanding of the invention, in Figure 3. In the second method the analog signal is transported in a base-band signal. In this case the OFDM centre frequency is at zero Hertz (Hz) and the sub-carriers are symmetrically spaced left and right from the centre. Therefore in RF terms they have to 'share' the same carrier frequency in base band. These two base band signals are referred to as I and Q signals. They are usually represented as direct and quadrature components of a complex signal. Both I and Q signals are required to transport the complete information. The procedure is also called base-band sampling.

The aforementioned preferred embodiment of the present invention is particularly well suited for use with switches and mixers.

An OFDM transceiver with analog I/Q generation may be envisaged as comprising signal treatment blocks that are essentially down converters, I/Q generators, analog/digital converters (ADC) and digital signal processors (DSPs) for the receive path; digital/analog converters (DACs); I/Q summation means; and up mixers, for the transmit path. The expressions Digital Signal Processor (DSPs) and base-band controller are used synonymously throughout the present Application.

It will be appreciated that DSP architecture may vary from a dedicated state machine to a generic software driven processor. Preferred embodiments of the Invention will now be described, by way of example only, and with a reference to the Figures, in which:

### Brief Description of Figures

Figures 1(a)-1(f) show diagrammatical representations of key processing stages performed on a received analog RF signal, in a HIPERLAN 2 receiver;
Figure 1(g) is a block diagram of a HIPERLAN 2 transceiver system, showing diagrammatically each processing stage of the signals shown in Figures 1(a) to 1(f);
Figure 2 illustrates schematically OFDM modulation;
Figure 3 is a diagrammatical representation of separation of I and Q signals and demodulation of two base-band signals;
Figure 4 is a Table of Equations which model the two sub-carriers shown in Figure 3;
Figure 5 is a block diagram showing an example of a demodulation scheme for base-band I and Q signals;
Figure 6 is a Table of Equations which describe demodulation in a mixer or oscillator suffering from cross-talk;
Figures 10 and 11 show principles of signal chopping;
Figure 12 shows in graphical form a chopped mixer/oscillator signal
Figure 13 is a Table of Equations which describe demodulation in a mixer or oscillator with cross-talk compensation;
Figure 14 is a graph of base-band low pass filter characteristics;
Figure 15 is a graph showing transmit filter mismatch characteristics;
Figure 16 is a graph showing receive filter mismatch characteristics;
Figure 17 is a constellation diagram showing simulated received QPSK signals without filter mismatch compensation;
Figure 18 is a constellation diagram showing simulated received QPSK signals with filter mismatch compensation;
Figure 19 is a block diagram of a conventional I/Q low pass filter system;
Figure 20 is a block diagram illustrating the principle of base-band low pass filtering in a HIPERLAN 2 transceiver;
Figure 21 shows a functional diagram of a signal path for pre and post compensation in filters in a HIPERLAN 2 transceiver; and
Figures 22-25 show functional diagrams of mixer compensation in a HIPERLAN 2 transceiver.

Referring to the Figures, and specifically Figures 1 and 3, and the Table in Figure 4, Figure 3 shows a simple analog model of I/Q signal flow from input signal to decoded data. The left hand side of Figure 3 represents the conversion from IF to base band (I and Q). The IF input signal is written in Cartesian components of two frequencies that are equally spaced left and right of the centre frequency. The right hand side of Figure 3 represents digital signal processing of a base band signal to final "recovered" digital data. Four independent data channels A, B, C and D are recovered as sums and differences of four intermediate signals (called X1, X2, X3, X4 in Figure 3). Channels A, B, C and D carry information from both sub-carriers, shown superimposed in Figure 1f.

To the left of the dotted line in Figure 3 there is shown in diagrammatical form a frequency translation from IF to base band (BB) to final data components (DC). The table in Figure 4 shows the equations modelling this, for an ideal case, where no mismatches are present.

In a demodulation system working with analog I and Q signals, it is apparent that signal mismatches reside in the analog stage(s) of the signal processing. The analog to digital (receiver) and digital to analog (transmitter) conversion stages, and the digital signal processing are usually of much higher precision and matching than the analog signal processing.

Figure 5 shows in block form an example circuit for generating I and Q signals in analog. In order to avoid frequency mismatch it is essential that the following components are matched: Mixers 70 with mixer 72 and mixer 74 with mixer 76. Also filters 78 and 80 need to be matched and filters 82 and 84; as well as input characteristics of summation inputs SU1-SU2; and dividers DIV1 and DIV2. However, as stated before this is not practical as drift and thermal effects alter characteristics of the components.

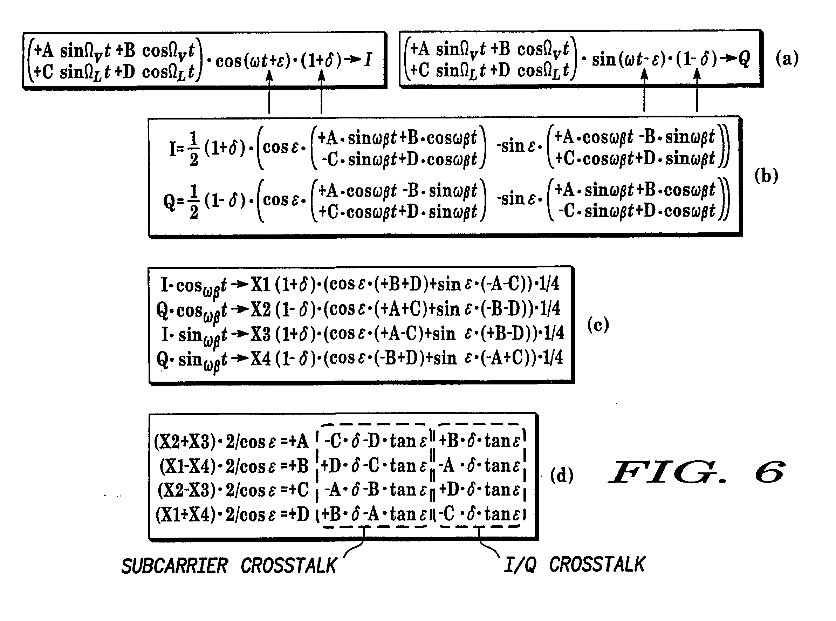

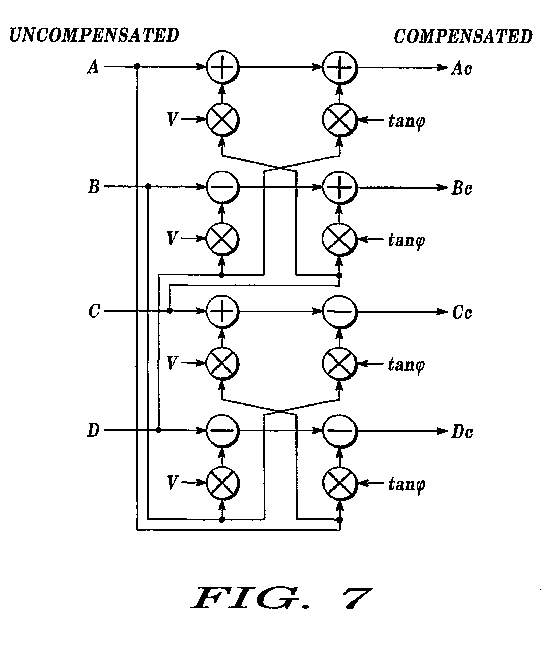

The generation of the I and Q phases is controlled by a clock signal provided by a Voltage Controlled Oscillator 86, gates G1-G2 and dividers 88, 90 and 92. The table in Figure 6 shows equations (taking into account timing and amplitude mismatches) of a local oscillator I and Q-phases for outputs from mixers, for example of the type shown in Figure 3. It can be seen that a major source of impairment is as a result of cross-talk between superimposing sub-carriers. This cross-talk interference is shown in the Equations in Figure 6 as comprising two terms: the first arising as sub-carrier cross-talk and the second as I/Q cross-talk.

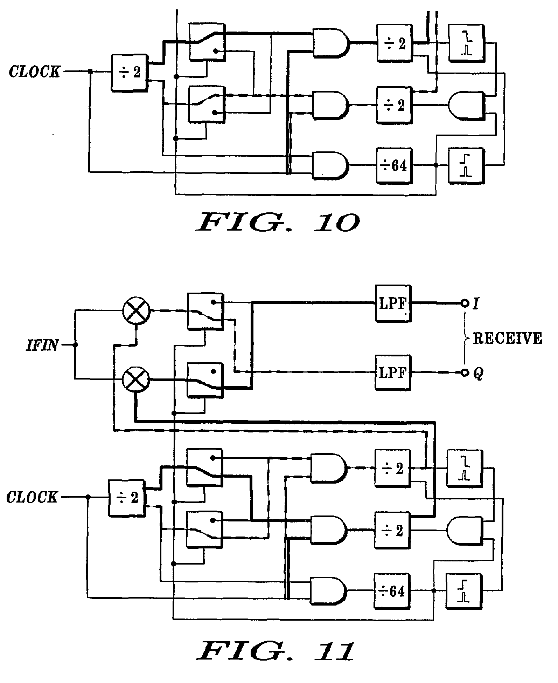

In order to solve the I/Q mismatch problems, which gives rise to the I/Q cross-talk, a system architecture is proposed and is shown in Figures 10 and 11. The system architecture comprises RF front end block, ADC/DAC converters and a digital base band signal processing block. I-Q mismatch compensation is achieved in two independent steps. Firstly there is correction of Low Pass filter mismatches. This is preferably performed under digital control from a base band processor by a measurement and compensation procedure. Secondly there is correction of mixer and oscillator mismatches. This is achieved by additional hardware at the analog section of the transceiver.

It is evident that both these stages have a cumulative effect on the transceiver performance. However, it will be appreciated that either may be used separately and this depends upon processing techniques and other conditions.

In the case of digital I-Q mismatch or separation, the base-band signal is in digital form (after analog to digital conversion) and is then fed to a digital signal processor 100 (DSP) which in turn creates the necessary I and Q signals using appropriate digital signal processing. There are no imperfections related to component mismatches in the digital domain. Only quantisation noise (due to the digital number representation) can cause deleterious effects.

The advantages of this method are: it is able to determine the necessary compensation for transmit and receive paths independently. Compensation is achieved without any up conversion. Furthermore compensation may be carried out without any signal transmission. This is known as offline compensation and has clear advantages.

No factory setup of compensation parameters is needed. That is the compensation can be done at power-on of the system and over and over again in time and adapted to changes such as temperature. No factory trimming of the product is needed resulting in higher yields. In case of preferred embodiment; lower cost; lower power; lower complexity in design; one set of parameters and only one training cycle is required instead of two.

It allows analog I/Q generation with high precision required for high performance OFDM system like HIPERLAN 2. It also provides an OFDM system architecture with low power consumption. Mixer amplitude and phase mismatch compensation will now be described with reference to figures 10 and 11.

A chopping mechanism is obtained within the transceiver whereby the I path signal is regularly obtained by the use of multiplexing (chopping) both mixers M3 and M4 multiplexed in time for a given channel. Mixer clock speed (DO1 or DO2) is arranged to be much higher than the chopping speed. This method equalizes mismatches in the mixers 13 and 14. The side effects of the chopping namely high frequency undesirable components, are filtered out by low pass filters 110 and 112.

Mixers M3 and M4 are driven by two clock sources which are multiplexed (chopped) as by a direct clock source and quadrature clock source. The outputs of the two mixers M3 and M4 are directed to I and Q paths using multiplexers such that the mixer which receives the direct mixer clock source is always directed to the I channel, and similarly, the Q path is always obtained from the mixer which is mixing with the quadrature clock source. Multiplexers S1, S2, S3 and S4 work in synchronism to guarantee this.

A chopping mechanism is created within the transceiver whereby clock sources (DO1 and DO2) for mixers M3 and M4 are obtained by multiplexing (chopping) both clock source generating elements (DIV1 and DIV2). This ensures that mismatch in phase of the sources can be equalized. Side effects of chopping, namely high frequency undesirable components, are eliminated by low pass filters F3 and F4. The chopping frequency (SWI) is much less than the frequency delivered by sources (DO1 and D02).

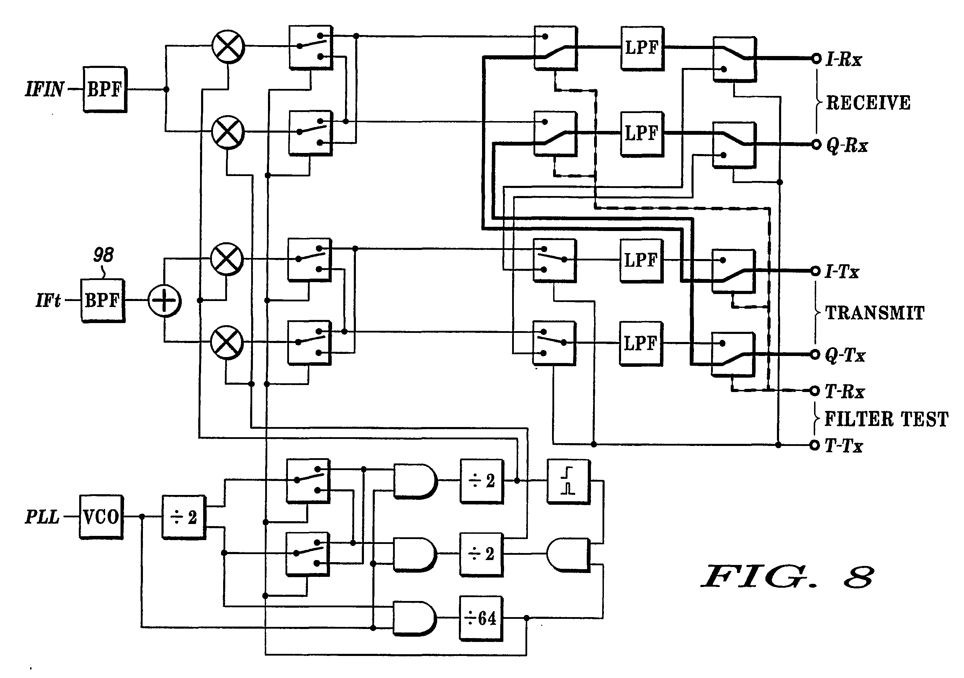

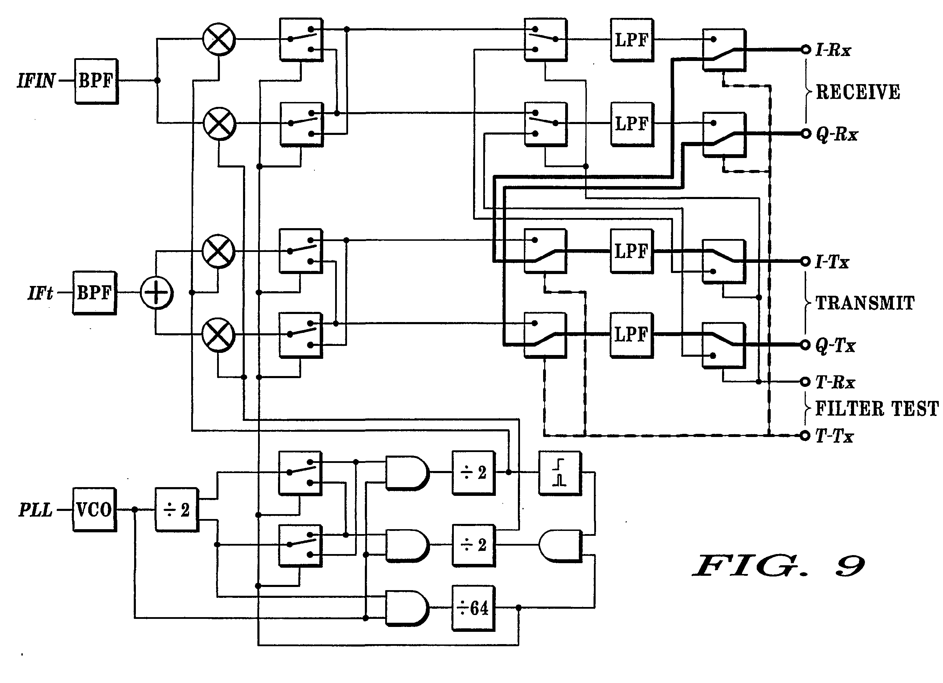

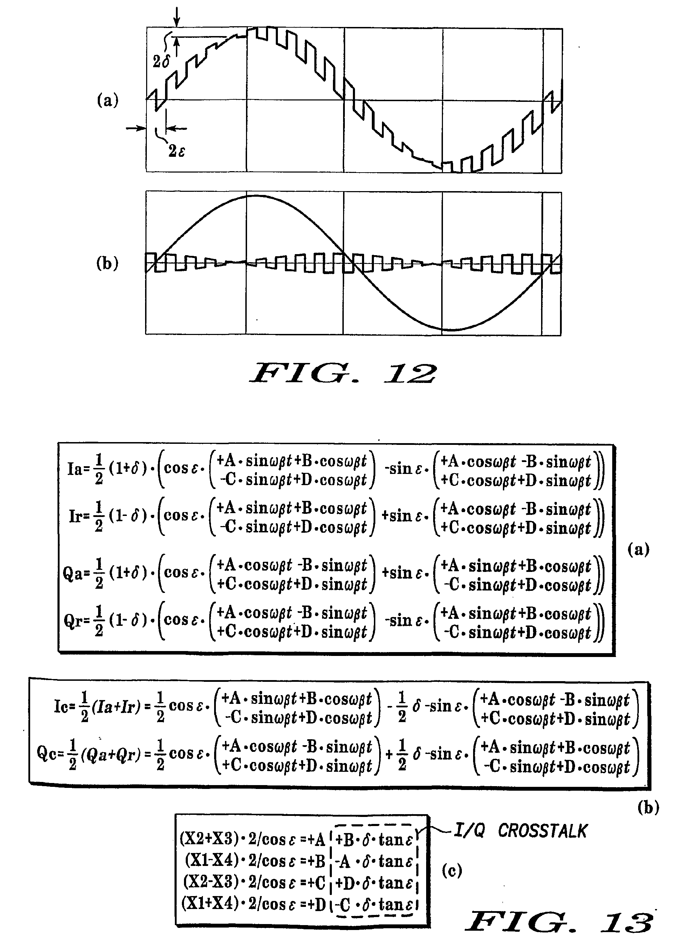

Figure 12 illustrates the result of the chopping procedure for one sub-carrier at reception. The channel mismatch occurring as a superimposed chopping frequency on the I and Q signals is filtered by base band filters 110 and 112 in the reception path in the same way as the signals are filtered by band pass filter 98 in the transmission path shown in Figure 8. During chopping the I and Q signals are switched between two physical paths that subject the signals to different properties, such as gain and delay. For ease of reference the resulting signals are suffixed "a" (for received signals Ia and Qa) and "r" resulting in Ir (Qr) in Figure 12. The equalized signals called Ic and Qc in Figure 12 are modelled as taking the average of both paths. The equations for this model are shown in Figure 13. When comparing the results with Figure 6 it can be seen that sub-carrier cross-talk has been removed. The remaining already negligible I/Q cross-talk is compensated by system equalization procedure in the OFDM system.

The advantages of this method are: compensation is achieved without any signal that needs to be transmitted (offline compensation). There is no involvement of the DSP, thus the method is less burdensome on processing power.

Implementation of the method is straightforward and no factory trimming is needed. Additionally any high frequency components generated during chopping (multiplexing) are filtered out by the low pass filters (reception) and the band pass filters (transmission), which are part of the system. All I/Q path mismatches (except the low pass filters) are eliminated.
The training signal (St) is generated in the DSP. It is a time domain signal including at least one symbol. It can be either stored as a set of time domain samples or obtained by OFDM modulation of a plurality of stored frequency domain components.
In a preferred embodiment (St) may comprise of a single packet of duration Tp, corresponding to the OFDM modulation of K/2 non-zero components D(1) to D(K/2) such that A(i)=1, φ(i)=0, and thus D(i)=1 for all (i) from 1 to K/2.
D(i) =A(i) e^{jφ(i)} is mapped on sub-carriers of frequency (f_{c}+i/Tᵤ).

After insertion of a cyclic extension, I and Q components are obtained and can be used to train either the transmit path or the receive path.

Simulation of I/Q mismatch compensation/precompensation for HIPERLAN/2

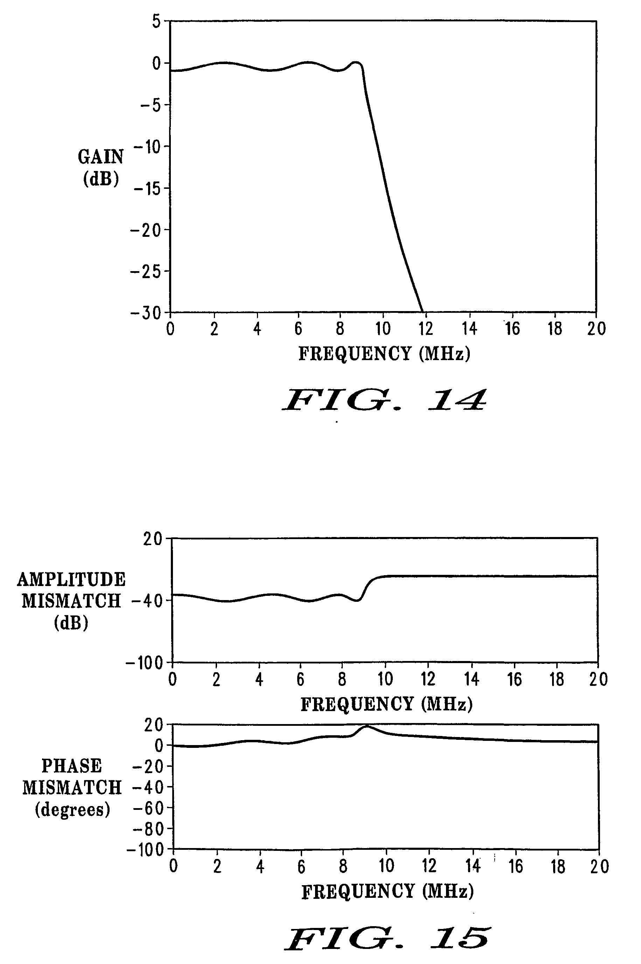

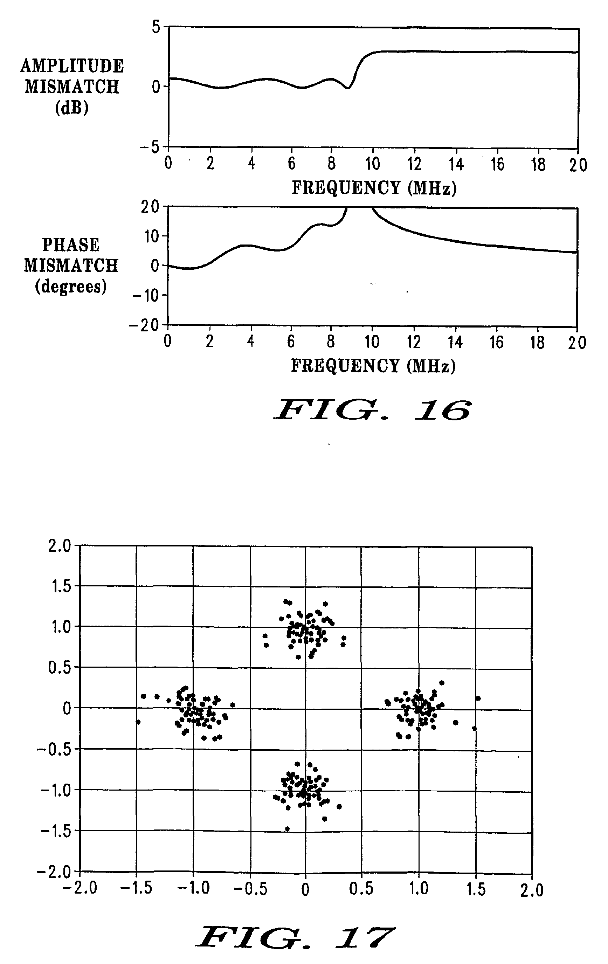

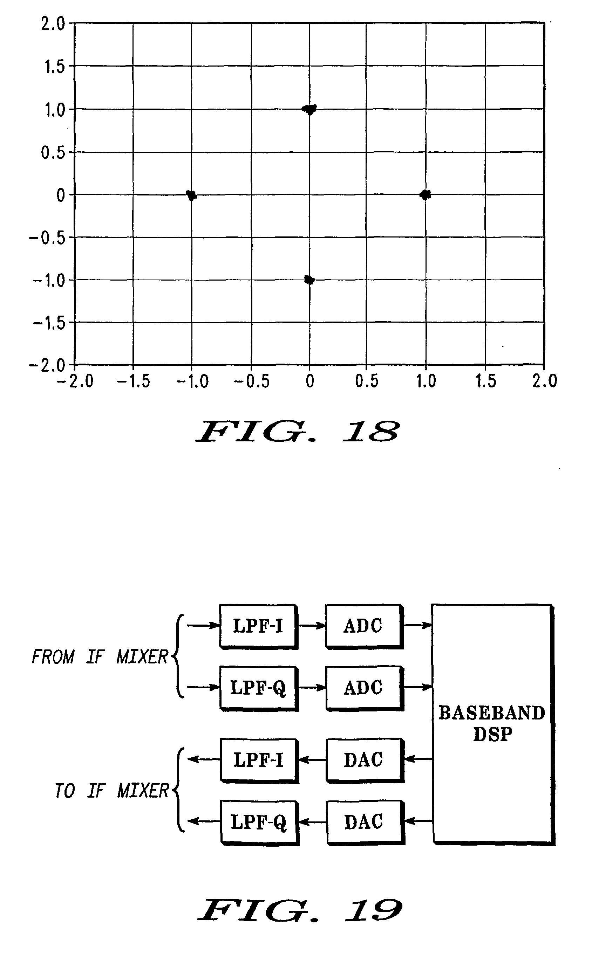

The HIPERLAN/2 system parameters are K=52 and N=64, the centre frequencies are separated by 20 MHz. On Figure.14, a typical base-band low-pass channel selectivity filter (LPF) is represented. In the simulation, we introduce a mismatch of the transmitter LPFs and a mismatch of the receiver LPFs, which is represented on Figures 15 and 16. In QPSK mode, when the mismatch is not compensated, the received constellation after channel compensation and with negligible noise is represented on Figure.17 and the rms vector error is -15.5 dB. When transmit precompensation and receive compensation are applied, the constellation is represented on Figure.18 and the rms vector error is -36 dB. Therefore, thanks to compensation and precompensation techniques, analog 1-Q can be used to get transmission modes requiring more than 30 dB signal to noise ratio.

In the case of Hiperlan 2 protocol, the transmission is TDD (time domain duplex); in other words half-duplex. In such an environment, transmit and receive filters do not require to be carrying signals simultaneously. This feature allows the possibility of multiplexing the receive and transmit filters since the characteristics of these filters are the same independent of signal direction.

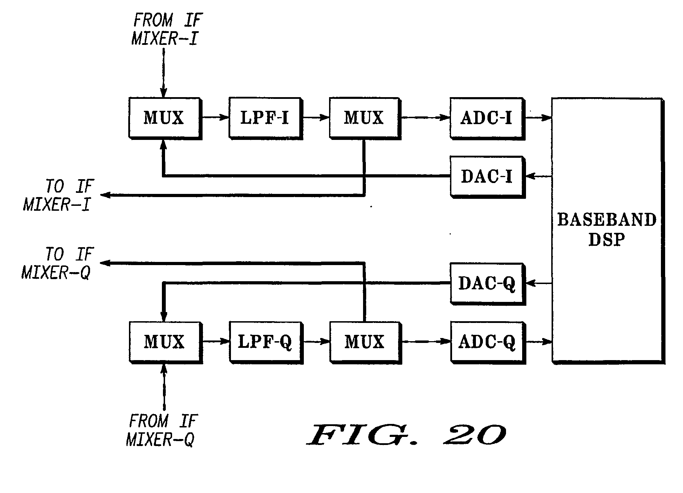

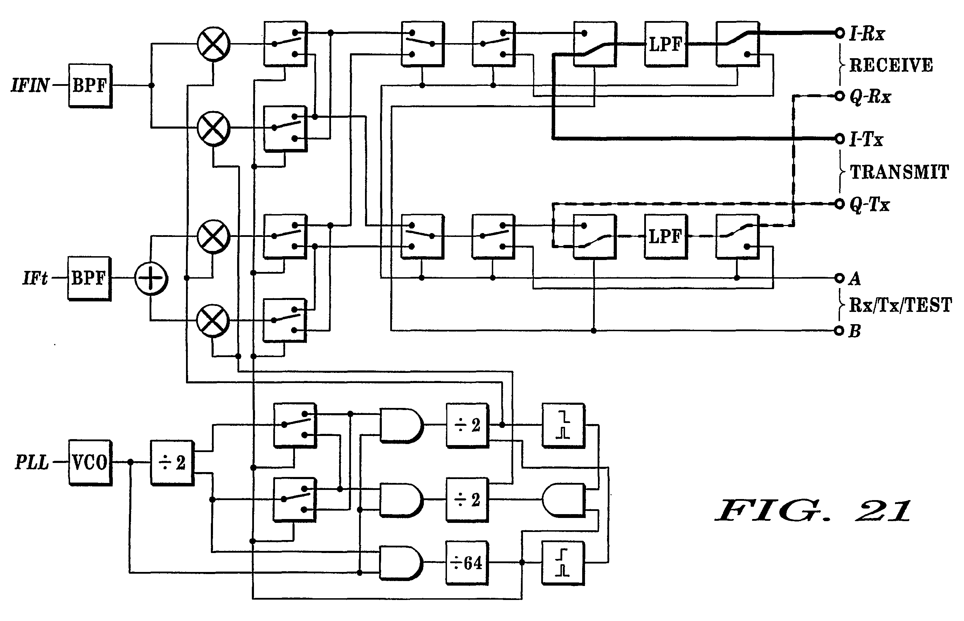

Hence as shown in Figures.20 and 21 (compare with Figure.19), it is possible to multiplex the input and output signal paths from one set of 1-Q low pass filters using a set of multiplexers such that the information flow is directed to the correct destination.

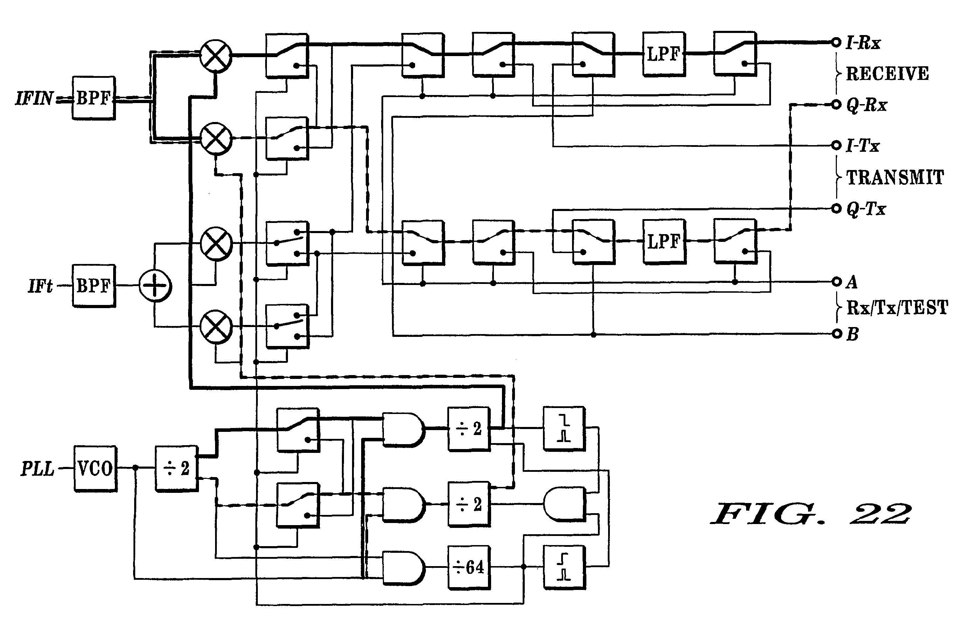

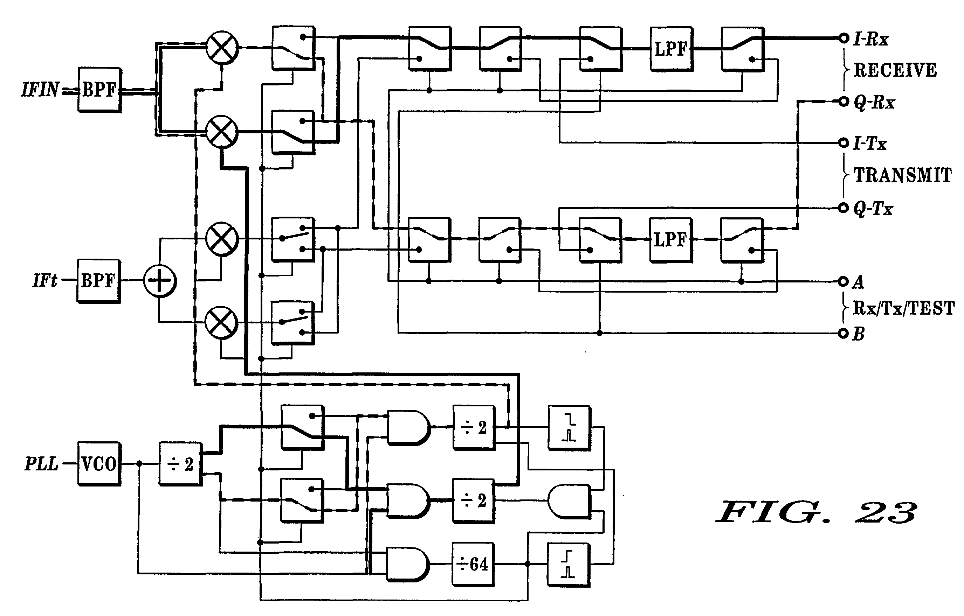

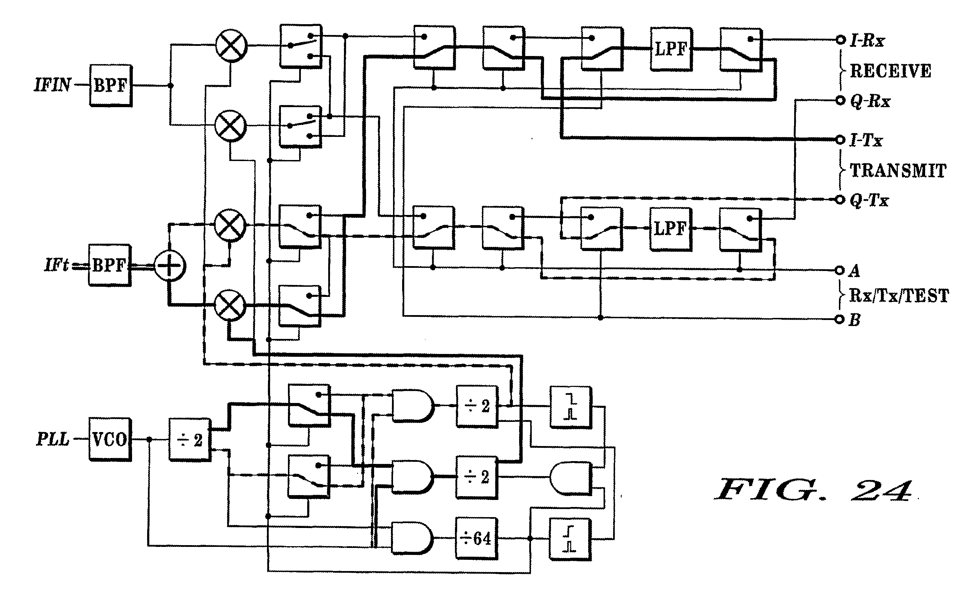

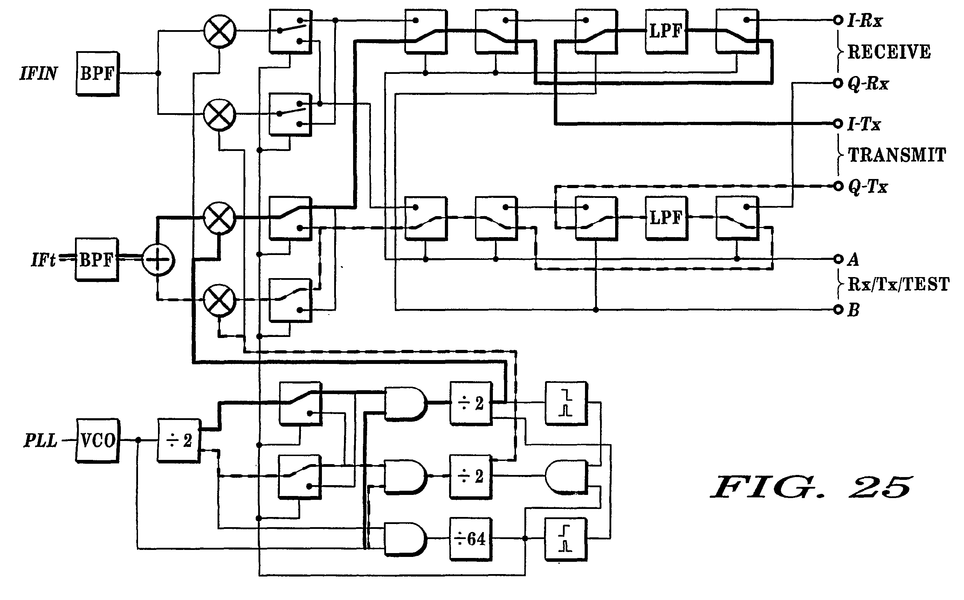

A major advantage of this scheme is that besides less hardware and power consumption, there is only one set of digital compensation parameters to be stored. This removes the need to train the transmit filters and then the receive filters. Figures 22 to 25 show how the multiplexed base-band filter paths of the preferred embodiment work together with the mixer/oscillator equalization paths.

It will be appreciated that the invention has been described by way of examples only, and variation may be made to the embodiments described, without departing from the scope of invention.

## Claims

1. An apparatus for mismatch compensation, the mismatch occuring between first and second RF signal paths, the apparatus **characterised in that** it comprises: at least one switch which applies a first RF signal, present on a first pathway, and a second RF signal, present on a second pathway, to respective first and second mixers, the mixers providing a first pair of mixed first and second RF signals; means for reversing the at least one switch, so that the first RF signal is applied to the second mixer, via the second pathway, and the second RF signal is applied to the first mixer, via the first pathway, the mixers thereby provide a second pair of mixed first and second RF signals; monitoring means provided to monitor respective first and second pairs of mixed RF signals during an interval, said interval comprising a plurality of sequential time periods, the monitoring means providing time averaged values for the first and second signals in each of said first and second pairs of RF signals; the effects of signal mismatch on the first and second RF signals being compensated in each channel, by subjecting said RF signals, for substantially the same time, to both pathways by reversing said at least one switch at a frequency higher than the frequency of the RF signals.

2. An apparatus according to claim 1 wherein the first and second signals are orthogonal one to another.

3. An apparatus according to claim 2 wherein the first and second signals are encoded quadrature components of an OFDM signal.

4. An apparatus according to any preceding claim wherein frequency mixing is performed at a baseband frequency, typically around 20 MHz.

5. An apparatus according to claim 4 wherein means is provided for down conversion from an intermediate to a base-band frequency.

6. An apparatus according to claim 5 wherein the down conversion is achieved by multiplication with a scale factor.

7. An apparatus according to any preceding claim wherein two switches are provided, each for the respective first and second paths.

8. An apparatus according to claim 7 wherein the switches are controlled by way of a micro-processor.

9. An apparatus according to claim 8 including at least one flip-flop associated with each channel which receives either of said first or second RF signals.

10. An apparatus according to any preceding claim including a frequency mismatch compensator.

11. An apparatus according to claim 10 included in an adaptive Radio Frequency (RF) filter.

12. An apparatus according to any preceding claim wherein means is provided for generating a test signal digitally and sending a time domain sample of the test signal to a Digital/Analog Converter (DAC) and subsequently to an RF Transceiver in a test mode.

13. An apparatus according to claim 12 wherein means is provided to route the test signal through the I and Q paths of the transmit chain.

14. An apparatus according to claim 12 wherein means is provided to route the test signal through the I and Q paths of the receive chain.

15. An apparatus according to claim 12 wherein transmit and receive filters are combined to a single set of filters and which are capable of being used in both transmit and receive modes using multiplexers.

16. An apparatus according to any of claims 12 to 15 wherein transmit and receive paths are selected by multiplexers before and after the filters are switched to receive or transmit modes.

## Patentansprüche

1. Vorrichtung für einen Fehlanpassungsausgleich, wobei die Fehlanpassung zwischen ersten und zweiten RF-Signalpfaden auftritt, wobei die Vorrichtung **dadurch gekennzeichnet ist, dass** sie umfasst: mindestens einen Schalter, der ein erstes RF-Signal, das auf einem ersten Pfad vorhanden ist, und ein zweites RF-Signal, das auf einem zweiten Pfad vorhanden ist, einem ersten beziehungsweise zweiten Mischer zuführt, wobei die Mischer ein erstes Paar von gemischten ersten und zweiten RF-Signalen zur Verfügung stellen; Mittel zum Umkehren des mindestens einen Schalters, sodass das erste RF-Signal dem zweiten Mischer über den zweiten Pfad zugeführt wird und das zweite RF-Signal dem ersten Mischer über den ersten Pfad zugeführt wird, wodurch die Mischer ein zweites Paar von gemischten ersten und zweiten RF-Signalen zur Verfügung stellen; Überwachungsmittel, die zur Verfügung gestellt werden, um das erste beziehungsweise zweite Paar gemischter RF-Signale während eines Intervalls zu überwachen, wobei das Intervall eine Mehrzahl sequenzieller Zeitperioden umfasst, wobei die Überwachungsmittel zeitlich gemittelte Werte für die ersten und zweiten Signale in jedem der ersten und zweiten Paare von RF-Signalen zur Verfügung stellen; wobei die Effekte einer Signalfehlanpassung auf den ersten und zweiten RF-Signalen in jedem Kanal durch ein Unterwerfen der RF-Signale in beiden Pfaden für im Wesentlichen die selbe Zeit durch Umkehren des mindestens einen Schalters bei einer Frequenz, die höher als die Frequenz der RF-Signale ist, ausgeglichen werden.

2. Vorrichtung gemäß Anspruch 1, wobei die ersten und zweiten Signale orthogonal zueinander sind.

3. Vorrichtung gemäß Anspruch 2, wobei die ersten und zweiten Signale codierte Quadraturkomponenten eines OFDM-Signals sind.

4. Vorrichtung gemäß einem der vorangehenden Ansprüche, wobei ein Frequenzmischen bei einer Basisbandfrequenz durchgeführt wird, typischerweise von ungefähr 20 MHz.

5. Vorrichtung gemäß Anspruch 4, wobei ein Mittel zum Herunterwandeln von einer Zwischenfrequenz zu einer Basisbandfrequenz vorgesehen ist.

6. Vorrichtung gemäß Anspruch 5, wobei die Herunterwandlung durch eine Multiplikation mit einem Skalierfaktor erreicht wird.

7. Vorrichtung gemäß einem der vorangehenden Ansprüche, wobei zwei Schalter vorgesehen sind, jeweils für die ersten und zweiten Pfade.

8. Vorrichtung gemäß Anspruch 7, wobei die Schalter mit Hilfe eines Mikroprozessors gesteuert werden.

9. Vorrichtung gemäß Anspruch 8, die mindestens eine Flip-Flop-Schaltung umfasst, die mit jedem Kanal verknüpft ist, der entweder die ersten oder zweiten RF-Signale empfängt.

10. Vorrichtung gemäß einem der vorangehenden Ansprüche, die einen Frequenzfehlanpassungskompensator umfasst.

11. Vorrichtung gemäß Anspruch 10, die in einem adaptiven RF-Filter enthalten ist (RF = Radiofrequenz).

12. Vorrichtung gemäß einem der vorangehenden Ansprüche, wobei ein Mittel zum digitalen Erzeugen eines Prüfsignals und zum Senden eines Zeitdomänenabtastwertes des Prüfsignals an einen Digital-Analog-Wandler (DAC) und danach an einen RF-Transceiver in einer Prüfbetriebsart vorgesehen ist.

13. Vorrichtung gemäß Anspruch 12, wobei ein Mittel vorgesehen ist, um das Prüfsignal durch die I- und Q-Pfade der Übertragungskette zu führen.

14. Vorrichtung gemäß Anspruch 12, wobei ein Mittel vorgesehen ist, um das Prüfsignal durch die I- und Q-Pfade der Empfangskette zu führen.

15. Vorrichtung gemäß Anspruch 12, wobei Übertragungs- und Empfangsfilter zu einem einzelnen Satz von Filtern verknüpft sind, die imstande sind, sowohl in der Übertragungs- als auch der Empfangsbetriebsart durch Verwenden von Multiplexern verwendet zu werden.

16. Vorrichtung gemäß einem der Ansprüche 12 bis 15, wobei Übertragungs- und Empfangspfade durch Multiplexer ausgewählt werden, bevor und nachdem die Filter in eine Empfangs- oder Übertragungsbetriebsart geschaltet werden.

## Revendications

1. Dispositif pour la compensation de désadaptation, la désadaptation se produisant entre des premier et deux chemins de signal RF, le dispositif étant **caractérisé en ce qu'**il comprend : au moins un commutateur qui applique un premier signal RF, présent sur un premier chemin, et un deuxième signal RF, présent sur un deuxième chemin, sur des premier et deuxième mélangeurs respectifs, les mélangeurs fournissant une première paire de premier et deuxième signaux RF mélangés ; des moyens destinés à inverser l'au moins un commutateur, de sorte que le premier signal RF est appliqué sur le deuxième mélangeur, par l'intermédiaire du deuxième chemin, et le deuxième signal RF est appliqué sur le premier mélangeur, par l'intermédiaire du premier chemin, les mélangeurs fournissent de ce fait une deuxième paire de premier et deuxième signaux RF mélangés ; des moyens de contrôle fournis pour contrôler des première et deuxième paires respectives de signaux RF mélangés pendant un intervalle, ledit intervalle comprenant une pluralité de périodes de temps séquentielles, les moyens de contrôle fournissant des valeurs moyennes de temps pour les premier et deuxième signaux dans chacune desdites première et deuxième paires de signaux RF ; les effets de désadaptation de signal sur les premier et deuxième signaux RF étant compensés dans chaque canal, en soumettant lesdits signaux RF, pendant sensiblement le même temps, aux deux chemins en inversant ledit au moins un commutateur à une fréquence supérieure à la fréquence des signaux RF.

2. Dispositif selon la revendication 1, dans lequel les premier et deuxième signaux sont orthogonaux l'un par rapport à l'autre.

3. Dispositif selon la revendication 2, dans lequel les premier et deuxième signaux sont des composants de quadrature encodés d'un signal OFDM.

4. Dispositif selon l'une quelconque des revendications précédentes, dans lequel le mélange de fréquence est réalisé à une fréquence de bande de base, généralement environ 20 MHz.

5. Dispositif selon la revendication 4, dans lequel des moyens sont prévus pour une conversion vers le bas depuis une fréquence intermédiaire à une fréquence de bande de base.

6. Dispositif selon la revendication 5, dans lequel la conversion vers le bas est atteinte par une multiplication par un facteur d'échelle.

7. Dispositif selon l'une quelconque des revendications précédentes, dans lequel deux commutateurs sont prévus, chacun pour les premier et deuxième chemins respectifs.

8. Dispositif selon la revendication 7, dans lequel les commutateurs sont commandés à l'aide d'un microprocesseur.

9. Dispositif selon la revendication 8, comprenant au moins une bascule bistable avec chaque canal qui reçoit l'un ou l'autre desdits premier et deuxième signaux RF.

10. Dispositif selon l'une quelconque des revendications précédentes comprenant un compensateur de désadaptation de fréquence.

11. Dispositif selon la revendication 10, compris dans un filtre de radiofréquence (RF) adaptatif.

12. Dispositif selon l'une quelconque des revendications précédentes, dans lequel des moyens sont prévus pour générer un signal de test numériquement et envoyer un échantillon de domaine temporel du signal de test à un convertisseur numérique/analogique (CNA) et ensuite à un émetteur/récepteur RF dans un mode de test.

13. Dispositif selon la revendication 12, dans lequel des moyens sont prévus pour acheminer le signal de test à travers les chemins I et Q de la chaîne d'émission.

14. Dispositif selon la revendication 12, dans lesquels des moyens sont prévus pour acheminer le signal de test à travers les chemins I et Q de la chaîne de réception.

15. Dispositif selon la revendication 12, dans lequel des filtres d'émission et de réception sont combinés en un seul ensemble de filtres et qui sont capables d'être utilisés à la fois dans des modes d'émission et de réception utilisant des multiplexeurs.

16. Dispositif selon l'une quelconque des revendications 12 à 15, dans lequel les chemins d'émission et de réception sont sélectionnés par des multiplexeurs avant et après que les filtres ne soient commutées vers les modes de réception ou d'émission.
